# DEMANDE DE BREVET EUROPEEN

(11) **EP 4 596 397 A2**
(43) Date de publication de la demande: **06.08.2025**
(21) Numéro de dépôt: 25184036.9
(22) Date de dépôt: 15.07.2021
(51) Int. Cl.: B64C 11/06

(54) **ENSEMBLE COMPORTANT UNE AUBE ET UN SYSTEME DE CALAGE ANGULAIRE DE L'AUBE**

(30) Priorité: 24.07.2020 FR 2007809; 24.07.2020 FR 2007812; 09.03.2021 FR 2102242
(62) Demande divisionnaire de: 21754811.4
(71) Demandeur: SAFRAN AIRCRAFT ENGINES, 75015 Paris (FR)
(72) Inventeur: COTTET,, Clément, 77550 MOISSY-CRAMAYEL (FR); COURTIER,, Vivien Mickaël, 77550 MOISSY-CRAMAYEL (FR); JOUDON,, Vincent, 77550 MOISSY-CRAMAYEL (FR); PAPIN,, Thierry Georges Paul, 77550 MOISSY-CRAMAYEL (FR)
(74) Mandataire: Gevers & Orès

(57) **Abrégé**

L'invention concerne un ensemble comportant une aube (10) d'hélice non carénée et un système (34) de calage angulaire de l'aube (10), pour une turbomachine d'aéronef, qui comporte :
- une aube (10) dont le pied (14) présente une portion en forme de bulbe (32) ;
- un système (34) de calage angulaire de l'aube (10) autour d'un axe (A) de calage, le système (34) de calage angulaire comportant un bol (58) qui est destiné à être agencé à l'intérieur du carter (73) externe, qui comporte une extrémité supérieure ouverte évasée pour l'insertion axiale du pied (14), et dans lequel le pied (14) de l'aube (10) est fixé axialement par un organe (52) d'immobilisation ;
caractérisé en ce qu'il comporte au moins une griffe (77) de rétention radiale dans un espace (E) radial réservé entre la paroi (58a) du bol (58) et le pied (14).

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'état de l'art comprend notamment les documents FR3021030A1, US2002/008177A1, US2010/239421A1, US5039278A, US2020/056490A1, US2013/343896A1, FR-A1-3 017 163 et FR-A1-3 080 322.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un système de calage permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (By Pass Ratio), ce qui se traduit par une augmentation de son diamètre externe et donc de l'envergure des aubes.

Dans l'ensemble des attaches de l'état de la technique, le pied d'aube est monté dans un fût métallique en interface avec les roulements pour permettre le calage variable. Ces pièces métalliques sont une partie intégrante de l'aube. En cas de perte d'aube, ces pièces métalliques dont la densité est grande par rapport au matériau composite composant le reste de l'aube ont une énergie significative. Or, l'énergie du débris lâché sur une architecture non carénée est un élément fondamental à optimiser car celui-ci peut heurter le fuselage. C'est donc un élément à prendre en compte pour le dimensionnement d'un blindage du fuselage et à fortiori pour la masse de l'avion.

L'invention a pour objectif de réduire le risque que le fuselage soit heurté par des éléments susceptibles de l'endommager, même en cas de défaillance des moyens de fixation de l'aube au système de calage.

Par ailleurs, un autre levier d'optimisation de la performance aérodynamique est l'amélioration du rendement proche du moyeu en soignant la qualité de l'écoulement aérodynamique. La maitrise de cet écoulement est d'autant plus complexe que l'aube est généralement à calage variable.

Une hélice à pales à calage variable comporte pour l'essentiel un moyeu tournant autour d'un axe de rotation et muni de logements recevant des aubes qui sont montées mobiles en pivotement autour d'axes de calage angulaire dans ces logements, les axes de calage s'étendant radialement par rapport à l'axe de rotation du moyeu. Chaque aube comporte un pied à partir duquel s'étend une pale. Le pied est monté dans un logement correspondant du moyeu par l'intermédiaire d'un palier orienté selon l'axe radial, qui est interposé entre une structure interne du moyeu et le pied de l'aube afin d'en permettre le pivotement.

Le moyeu comporte généralement un carter externe qui constitue un carénage aérodynamique du moyeu. Dans ce carter sont pratiqués des ouvertures par lesquelles les logements débouchent, et par lesquelles les pieds des aubes sont introduits dans le moyeu.

Il existe donc des discontinuités aérodynamiques au niveau de ce carénage au voisinage des ouvertures, d'une part entre les pieds des aubes et les bords des ouvertures, et d'autre part entre les pieds des aubes et les pales des aubes. Ces discontinuités aérodynamiques provoquent des turbulences autour de la base des pales, qui détériorent le rendement aérodynamique global de l'hélice.

Selon une solution technique connue, il est prévu une plateforme de pale qui obture le trou présent dans le moyeu. Le dessin de cette plateforme permet de garantir une bonne continuité géométrique à un calage particulier donc un point de vol particulier. Ce point est traditionnellement choisi comme le point sur lequel on souhaite optimiser les performances. Lors de la variation du calage, la plateforme crée un ressaut avec le moyeu. Cette rupture dans la géométrie est alors une source de perte d'efficacité pour les pales.

La plateforme n'est pas un composant présent systématiquement dans l'état de l'art des architectures moteur non carénées.

Par ailleurs, lorsqu'elle est présente, la plateforme est un élément de capotage pour réaliser la performance aérodynamique et n'a pas de fonction structurale.

### Résumé de l'invention

L'invention concerne un ensemble comportant une aube d'hélice non carénée et un système de calage angulaire de l'aube, pour une turbomachine d'aéronef, qui comporte :
- une aube comportant une pale reliée à un pied de liaison qui est destiné à être attaché à un moyeu de l'hélice et qui est destiné à être reçu dans une ouverture associée d'un carter externe de moyeu, le pied présentant une portion en forme de bulbe ;
- un système de calage angulaire de l'aube autour d'un axe de calage, le système de calage angulaire comportant un bol qui est destiné à être agencé à l'intérieur du carter externe, qui comporte une extrémité supérieure ouverte évasée pour l'insertion axiale du pied dans une paroi annulaire du bol, et dans lequel le pied de l'aube est fixé axialement par un organe d'immobilisation qui est fixé au bol, le bol de réception étant destiné à être monté pivotant autour de l'axe de calage par rapport au moyeu ;
caractérisé en ce qu'il comporte au moins une griffe de rétention qui s'étend radialement depuis la paroi du bol dans un espace radial réservé entre la paroi du bol et le pied, la griffe étant agencée axialement en vis-à-vis du bulbe, la griffe étant susceptible de retenir le pied de l'aube à l'intérieur du bol par contact avec le bulbe en cas de défaillance de l'organe de fixation du pied dans le bol.

Selon un autre aspect de l'ensemble réalisé selon les enseignements de l'invention, la griffe est réalisée en une pièce avec un organe de support qui est rapporté et fixé au bol.

Selon un autre aspect de l'ensemble réalisé selon les enseignements de l'invention, l'organe de support comporte une patte axiale de fixation qui est fixée contre une face interne du bol et depuis laquelle la griffe s'étend radialement.

Selon un autre aspect de l'ensemble réalisé selon les enseignements de l'invention, l'organe de support comporte un plateau radial de fixation d'une plateforme destinée à obturer l'ouverture associée du carter, le plateau de fixation étant agencé à une extrémité supérieure de la patte de fixation, le plateau s'étendant au-dessus d'un bord d'extrémité supérieure du bol.

Selon un autre aspect de l'ensemble réalisé selon les enseignements de l'invention, la griffe est susceptible de fléchir pour amortir un déplacement du pied de l'aube axialement en cas de défaillance de l'organe d'immobilisation du pied dans le bol.

Selon un autre aspect de l'ensemble réalisé selon les enseignements de l'invention, la griffe présente un tronçon principal dirigée radialement vers l'intérieur depuis la patte de fixation et un tronçon d'extrémité recourbé radialement vers l'extérieur pour favoriser la déformation de la griffe en cas de déplacement axial du pied de l'aube.

Selon un autre aspect de l'ensemble réalisé selon les enseignements de l'invention, la griffe est déformable élastiquement en flexion sur au moins une partie de son mouvement de flexion.

Selon un autre aspect de l'ensemble réalisé selon les enseignements de l'invention, en position fixée du pied de l'aube dans le bol, la griffe est agencée axialement à distance du bulbe du pied.

Selon un autre aspect de l'ensemble réalisé selon les enseignements de l'invention, en position fixée du pied de l'aube dans le bol, la griffe est agencée précontrainte en flexion contre le bulbe du pied.

Selon un autre aspect de l'ensemble réalisé selon les enseignements de l'invention, l'organe de support comporte une pluralité de griffes qui sont réparties régulièrement autour du pied de l'aube.

Selon un autre aspect de l'ensemble réalisé selon les enseignements de l'invention, l'organe de support est réalisé en plusieurs secteurs distincts dont chacun est fixé indépendamment au bol.

Selon un autre aspect de l'ensemble réalisé selon les enseignements de l'invention, le bol comporte une face d'épaulement qui s'étend radialement en saillie vers l'intérieur depuis sa face interne et qui reçoit en appui axial vers le haut l'organe de support.

Selon un autre aspect de l'ensemble réalisé selon les enseignements de l'invention, la face d'épaulement est formée par la face inférieure d'un rebord qui s'étend radialement vers l'intérieur depuis le bord d'extrémité supérieure du bol.

Selon un autre aspect de l'ensemble réalisé selon les enseignements de l'invention, l'organe de support est en appui radial vers l'extérieur contre la face interne du bol.

Selon un autre aspect de l'ensemble réalisé selon les enseignements de l'invention, l'organe de support est fixé au bol par l'intermédiaire d'une vis de fixation qui est reçue dans des orifices de passage présentant un diamètre supérieure au diamètre de sa tige, la vis étant vissée dans un écrou monté avec un débattement radial dans l'orifice du bol ou dans l'orifice de l'organe de fixation afin que des efforts axiaux appliqués à la griffe vers le haut passent uniquement par la face d'épaulement contre laquelle l'organe de fixation est en appui.

Selon un autre aspect de l'ensemble réalisé selon les enseignements de l'invention, l'organe d'immobilisation est formé par une bague d'immobilisation qui s'étend autour dudit axe et qui est configurée pour être montée autour du pied, cette bague d'immobilisation étant configurée pour être montée à l'intérieur du bol et pour coopérer respectivement avec le pied et la paroi annulaire du bol afin d'assurer la rétention axiale du pied dans le bol.

Selon un autre aspect de l'ensemble réalisé selon les enseignements de l'invention, une portion de la griffe s'étend axialement en vis-à-vis de la bague d'immobilisation.

Selon un autre aspect de l'ensemble réalisé selon les enseignements de l'invention, la bague d'immobilisation est une bague de crabotage qui comporte des dents externes de crabot configurées pour coopérer avec des dents internes de crabot complémentaires de la paroi annulaire du bol.

Selon un autre aspect de l'ensemble réalisé selon les enseignements de l'invention, la bague d'immobilisation a en section transversale une forme de coin et est configurée, sous l'effet des forces centrifuges en fonctionnement, pour être sollicitée axialement vers l'extérieur du bol et pour maintenir serré axialement le pied d'aube par effet de coin.

Selon un autre aspect de l'ensemble réalisé selon les enseignements de l'invention, il comprend en outre :
- un palier de guidage à roulement inférieur s'étendant autour dudit axe et monté autour d'une partie inférieure de la paroi annulaire,
- un palier de guidage à roulement supérieur s'étendant autour dudit axe et monté autour d'une partie supérieure de la paroi annulaire,
- au moins l'un des paliers de guidage ayant sa bague interne qui est intégrée audit bol.

L'invention concerne aussi une turbomachine, en particulier d'aéronef, comportant au moins un ensemble selon les enseignements de l'invention.

### Brève description des figures

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique en perspective d'une aube d'hélice pour une turbomachine d'aéronef, et illustre la présente invention,

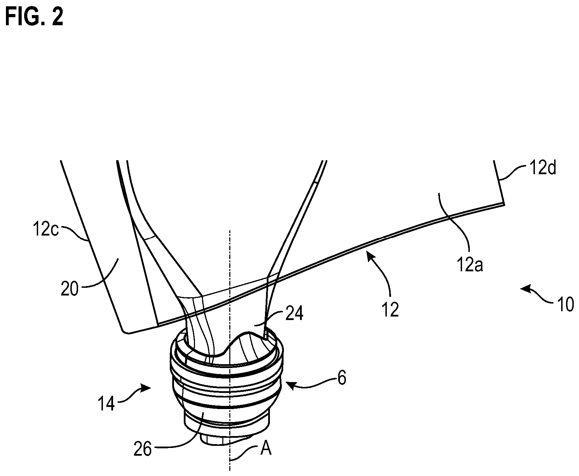

- la figure 2 est une vue à plus grande échelle d'une partie de la figure 1 et montre le pied de l'aube,
- la figure 3 est une vue schématique en perspective et avec éclaté partiel du pied de l'aube de la figure 1,
- la figure 4 est une vue schématique en perspective du corps du pied de l'aube de la figure 1,
- la figure 5 est une autre vue schématique en coupe axiale du pied de l'aube de la figure 1 et de paliers de guidage, le plan de coupe s'étendant le long d'une corde de la pale de l'aube,
- la figure 6 est une vue schématique en coupe axiale du pied de l'aube de la figure 1 et des paliers de guidage, le plan de coupe s'étendant transversalement à la corde de la pale de l'aube,
- la figure 7 est une autre vue schématique en coupe selon la ligne VII-VII de la figure 5,
- la figure 8 est une vue schématique en coupe axiale du pied de l'aube de la figure 1 et d'un mode de réalisation d'un système de calage angulaire de cette aube comportant une griffe de rétention réalisée selon un premier mode de réalisation de l'invention,
- la figure 9 est une vue schématique en perspective d'un bol du système de la figure 8,
- la figure 10 est une vue schématique en perspective d'une bague de crabotage du système de la figure 8,
- la figure 11 est une vue schématique en perspective d'un anneau de verrouillage du système de la figure 8,
- la figure 12 est une vue schématique en perspective et en coupe axiale partielle du pied de l'aube et du système de la figure 8, et montre une première étape de montage, la partie supérieure du bol ayant été coupée pour permettre de mieux voir l'intérieur du bol,
- la figure 13 est une vue schématique en perspective et en coupe axiale partielle du pied de l'aube et du système de la figure 8, et montre une deuxième étape de montage,
- la figure 14 est une vue schématique en perspective et en coupe axiale partielle du pied de l'aube et du système de la figure 8, et montre une troisième étape de montage,
- la figure 15 est une vue schématique en perspective et en coupe axiale partielle du pied de l'aube et du système de la figure 8, et montre une quatrième étape de montage,
- la figure 16 est une vue schématique en perspective et en coupe axiale partielle du pied de l'aube et du système de la figure 8, et montre une cinquième étape de montage,
- la figure 17 est une vue schématique en perspective et en coupe axiale partielle du pied de l'aube et du système de la figure 8, et montre une sixième étape de montage, et
- la figure 18 est une vue schématique en coupe axiale du pied de l'aube de la figure 1 et d'une variante de réalisation d'un système de calage angulaire de cette aube comportant une griffe de rétention réalisée selon le premier mode de réalisation de l'invention,
- la figure 19 est une demi-vue similaire à celle de la figure 8 qui montre un deuxième mode de réalisation de la griffe de rétention,
- la figure 20 est une demi-vue similaire à celle de la figure 8 qui représente un troisième mode de réalisation de la griffe de rétention,
- la figure 21 est une vue en perspective avec coupe axiale partielle qui représente schématiquement une griffe de rétention réalisée selon une variante de réalisation de l'invention,
- la figure 22 est une vue similaire à celle de la figure 21 qui représente une autre variante de réalisation de la griffe de rétention.

### Description détaillée de l'invention

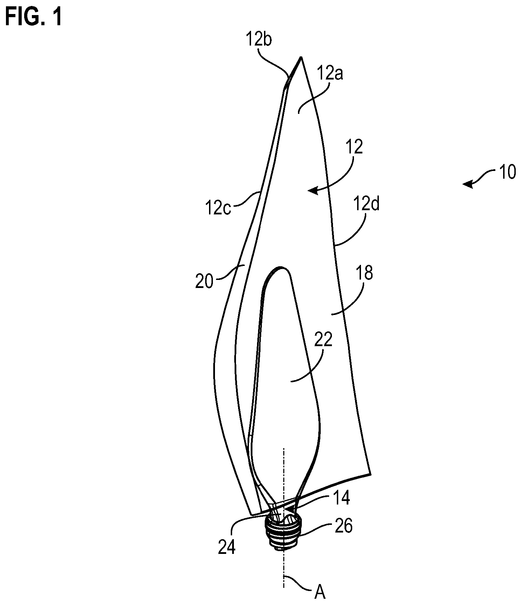

La figure 1 montre une aube 10 pour une hélice d'une turbomachine d'aéronef, cette hélice étant carénée ou non carénée.

L'aube 10 comprend une pale 12 reliée à un pied 14.

La pale 12 a un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale 12 en fonctionnement.

La pale 12 a une extrémité supérieure qui est libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais Resin Transfer Molding). Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22 qui comprend une partie formant une âme de la pale 12 et qui est destinée à être insérée dans la préforme 18 avant l'injection de résine, et une partie qui s'étend du côté opposé au sommet de la pale 12 pour former une partie du pied 14, appelé corps 24.

Le longeron 22 est préférentiellement en matériau composite à matrice organique époxy renforcée par fibres de carbone tissées 3D avec la direction chaîne majoritairement orientée radialement et la trame majoritairement orientée selon la corde de la pale 12 à hauteur de veine aérodynamique. Cependant, le longeron peut également être un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprend une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale 12 à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

L'axe "A" est un axe d'allongement de l'aube 10 et de la pale 12 et en particulier un axe "A" de calage de l'aube 10, c'est-à-dire l'axe autour duquel la position angulaire de l'aube 10 est ajustée. C'est en général aussi un axe radial qui s'étend donc suivant un rayon par rapport à l'axe de rotation de l'hélice équipée de cette aube 10.

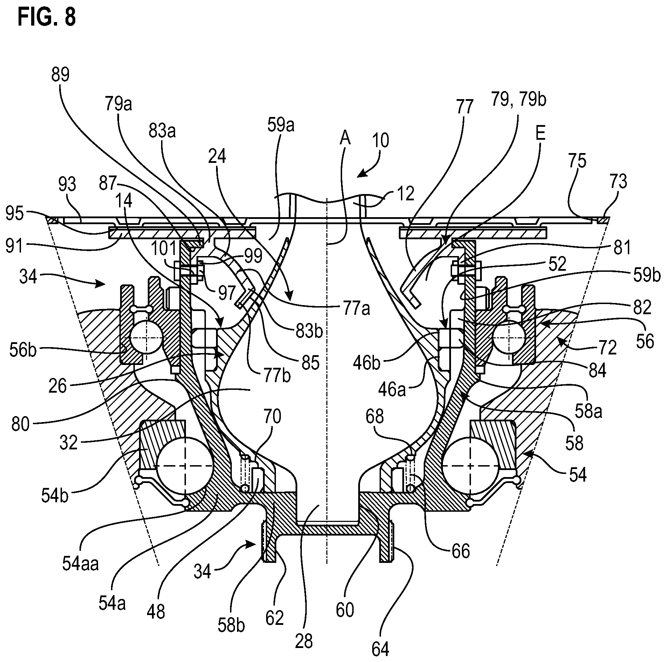

Comme cela est représenté à la figure 8, l'aube 10 est attachée par son pied 14 à un moyeu 72 de turbomachine par l'intermédiaire d'un système 34 de calage angulaire qui sera décrit plus en détails par la suite. Le moyeu 72 est ici un anneau qui sert de disque de rotor. Le moyeu 72 est équipé d'un carter 73 externe qui constitue un carénage aérodynamique du moyeu 72. Le carter 73 comporte une ouverture 75 de passage de l'aube 10, le pied 14 étant ainsi logé à l'intérieur du carter 73 tandis que la pale 12 s'étend radialement à l'extérieur du carter 73.

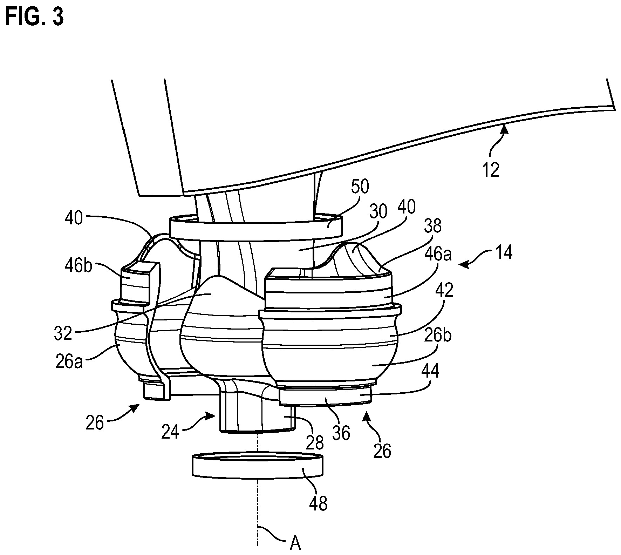

Le pied 14 comporte un corps 24 qui a une forme particulière mieux visible aux figures 3 à 7. Le corps 24 comprend un bulbe 32 qui est relié à la pale 12 par un tronçon radialement plus étroit que le bulbe 32, appelé échasse 30. Le corps 24 est de préférence plein, c'est-à-dire qu'il est exempt de partie creuse évidée.

Dans le mode de réalisation représenté aux figures, le pied 14 comporte ici un fût 26 métallique qui enveloppe au moins en partie le corps 24, et notamment le bulbe 32, comme cela sera expliqué plus en détails par la suite.

Le fût 26 est de préférence indépendant du système 34 de calage angulaire.

Le pied 14 est destiné à être monté dans le moyeu 72 par l'intermédiaire du système 34 de calage angulaire qui permet le pivotement de l'aube 10 autour de son axe "A" de calage par rapport au moyeu 72.

Le système 34 de calage angulaire comprend un bol 58 comportant une paroi annulaire 58a s'étendant autour de l'axe "A" de calage. Le bol 58 sert de pivot pour l'aube 10 par rapport au moyeu 72. Cette paroi 58a comporte une extrémité axiale inférieure fermée par une paroi de fond 58b, et une extrémité axiale supérieure ouverte par un passage 59a délimité radialement par un bord 59b d'extrémité supérieure de la paroi 58a. La paroi 58a est évasée de bas en haut pour autoriser le montage du pied 14 de l'aube 10 à l'intérieur du bol 58 par insertion axiale selon la direction de l'axe "A" de calage. Le bol 58 est réalisé en une seule pièce.

La paroi 58a du bol 58 est délimitée radialement vers l'intérieur par une face interne 59b.

Un organe 66 élastiquement déformable, tel qu'un ressort hélicoïdal, s'étend autour de l'axe "A" de calage et est monté à l'intérieur du bol 58. Cet organe 66 prenant appui axialement sur la surface supérieure de la paroi de fond 58b, à la périphérie externe de cette surface dans l'exemple représenté, et est configuré pour solliciter axialement le pied 14 de l'aube 10 vers l'extérieur du bol 58 c'est-à-dire du côté du sommet de l'aube 10.

Comme on le voit à la figure 8, le bol 58 est conçu pour être monté pivotant autour de l'axe "A" de calage dans le moyeu 72. Plus particulièrement il est conçu pour supporter des paliers 54, 56 qui assurent le centrage et le guidage du bol 58 autour de l'axe "A" de calage vis-à-vis du moyeu 72.

Les paliers 54, 56 peuvent faire partie du système 34 de calage angulaire. En particulier, au moins l'un des paliers de guidage peut avoir sa bague interne qui est intégrée au bol 58.

C'est ici le cas du palier inférieur 54 qui a sa bague interne 54a intégrée au bol 58. En pratique, cela signifie que le bol 58 comprend un chemin de roulement 54a à sa périphérie externe sur laquelle roule directement les billes du palier 54. Ce chemin de roulement comprend une surface annulaire à section incurvée concave. Ce chemin de roulement est ici situé à l'extrémité inférieure du bol 58 et de la paroi 58a. La bague externe 54b du palier 54 est fixée au carter 73, par exemple par frettage. Par ailleurs, le bol 58 est avantageusement conçu pour appliquer une précontrainte au palier 54.

La bague externe 56b du palier 56 est fixée au carter 73, par exemple par frettage. Sa bague interne 56a est engagée sur et autour de l'extrémité supérieure libre du bol 58 et de la paroi 58a. Cette extrémité de la paroi 58a comprend une surface cylindrique externe 76 de montage de la bague interne 56a ainsi qu'un filetage externe de vissage d'un écrou 78 destiné à prendre appui axialement sur la bague interne 56a pour la maintenir serrée axialement contre un épaulement cylindrique externe 80 du bol 58.

La paroi 58a du bol 58 est évasée vers l'extérieur de manière que le bulbe 32 est libre d'être inséré par coulissement axial vers l'intérieur du bol 58. Il est donc nécessaire de prévoir un organe d'immobilisation pour fixer axialement le bulbe 32 dans le bol 58, et ainsi assurer la fixation axiale de l'aube 10 par rapport au moyeu 72. A cet effet, le bol 58 comprend dans sa face 59b interne des moyens configurés pour coopérer avec une bague d'immobilisation 52 formant ledit organe d'immobilisation.

La bague d'immobilisation 52 s'étend autour de l'axe "A" de calage et est configurée pour être montée autour du pied 14. Cette bague d'immobilisation 52 est configurée pour être montée à l'intérieur du bol 58 et pour coopérer respectivement avec le pied 14 et la paroi annulaire 58a du bol 58 afin d'assurer la rétention axiale du pied 14 dans le bol 58.

Différents modes de réalisation de cette bague 52 d'immobilisation seront détaillés par la suite.

L'aube 10 est en outre solidaire en rotation avec le bol 58. La paroi de fond 58b est ici configurée pour coopérer par complémentarité de formes avec l'extrémité libre du pied 14, et donc avec une extrémité 28 libre du corps 24, de façon à ce que le bol 58 soit solidarisé en rotation avec le pied 14 autour de l'axe. Dans le cas présent, on comprend que la paroi de fond 58b comprend un évidement 60 ayant une section transversale non circulaire, et en particulier rectangulaire, et configuré pour recevoir l'extrémité 28 (figure 8).

Selon les enseignements de l'invention, le système 34 de calage angulaire comporte un dispositif de sécurité pour retenir le pied 14 de l'aube 10 à l'intérieur du bol 58 lorsque l'organe d'immobilisation, notamment la bague 52 d'immobilisation, ne peut plus remplir sa fonction de fixation. Ce dispositif de sécurité permet d'éviter que l'aube 10 ne vienne heurter l'aéronef en cas de détachement.

A cet effet au moins une griffe 77 de rétention s'étend radialement depuis la face 59b interne du bol 58 dans un espace "E" radial réservé entre la paroi 58a du bol 58 et le pied 14. Un tronçon de la griffe 77 est agencé axialement en vis-à-vis du bulbe 32 restreignant ainsi la section de passage 59a du bol 58 pour retenir le pied 14 de l'aube 10 à l'intérieur du bol 58 en cas de défaillance de l'organe d'immobilisation du pied 14 dans le bol 58. De cette manière, lorsque le pied 14 se détache du bol 58, il subit une force centrifuge orientée radialement qui tend à le faire sortir du bol 58. La griffe 77 forme une restriction de la section de passage 59a du bol 58 qui entre en contact avec le pied 14. La force centrifuge exercée sur l'aube 10 est ainsi transmise au moyeu 72 par l'intermédiaire de la griffe 77 et du bol 58 pour retenir l'aube 10 dans le bol 58.

La griffe 77 forme une protubérance ponctuelle et qui, dans un mode de réalisation, ne s'étend pas circonférentiellement de manière continue autour de l'axe "A" de calage.

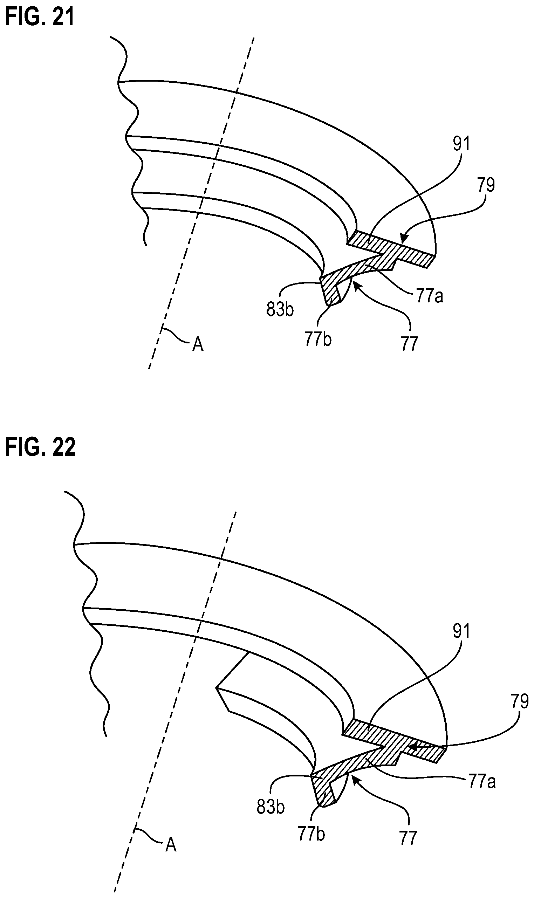

En variante de réalisation de la griffe 77 qui est représentée à la figure 21, la griffe 77 présente la forme d'une paroi de révolution. La conformation en griffe 77 telle que décrite par la suite étant définie suivant une couple dans un plan qui contient l'axe "A" de calage.

Selon une autre variante de réalisation de la griffe 77 qui est représentée à la figure 22, la griffe 77 se présente sous la forme de segments d'une paroi de révolution. La conformation en griffe 77 telle que décrite par la suite étant définie suivant une couple dans un plan qui contient l'axe "A" de calage.

Comme représenté à la figure 8, la griffe 77 est réalisée en une pièce avec un organe 79 de support qui est rapporté et fixé au bol 58. L'organe 79 de support comporte une patte 81 de fixation axiale qui est fixée contre la face 59b interne du bol 58 et depuis laquelle la griffe 77 s'étend radialement. Plus particulièrement, la griffe 77 s'étend radialement depuis une extrémité supérieure de la patte 81 de fixation.

Dans les modes de réalisation représentés aux figures 21 et 22, plusieurs pattes de fixation sont réparties ponctuellement autour de la griffe 77 formant une paroi de révolution ou des segments de paroi de révolution. Les portions représentées aux figures 21 et 22 ne comportent pas de pattes de fixation.

La patte 81 de fixation est par exemple fixée à la paroi 58a du bol 58 au moyen d'un ensemble formé d'une vis 97 et d'un écrou 99 serti. L'écrou 99 est par exemple réalisé par sertissage de deux rivets à travers la paroi 58a du bol 50 ou à travers la patte 81 de fixation. L'écrou 99 est par exemple monté avec un jeu dans le plan de la paroi qu'il traverse, la vis 97 permettant de réaliser la fixation par serrage. Les orifices 101 de passage permettant le passage de la vis 97 présentent un diamètre légèrement supérieur au diamètre de la tige de la vis 97 afin d'éviter de faire travailler la vis 97 en cisaillement en maintenant la tige de la vis à distance des bords des orifices 101. La fixation est ainsi réalisée essentiellement par serrage de la vis 97 contre le support.

L'organe 79 de support est réalisé en un matériau métallique tel que de l'acier, du titane ou un alliage de titane, tel que du TA6V, de l'inconel ou de l'aluminium.

La griffe 77 est susceptible de fléchir pour amortir un déplacement du pied 14 de l'aube 10 axialement en cas de défaillance de l'organe d'immobilisation du pied 14 dans le bol 58. Ainsi l'énergie cinétique de l'aube 10 est convertie en énergie de déformation de la griffe 77. La griffe 77 présente plus particulièrement un premier coude 83a au niveau de son extrémité de liaison avec la patte 81 de fixation. La griffe 77 est susceptible de fléchir par déformation de ce premier coude 83a.

Pour conférer une plus grande flexibilité à la griffe 77, celle-ci présente un tronçon 77a principal, qui est ici globalement rectiligne, dirigé radialement vers l'intérieur depuis la patte 81 de fixation et un tronçon 77b d'extrémité, qui est ici globalement rectiligne, recourbé radialement vers l'extérieur pour favoriser la déformation de la griffe 77 en cas de déplacement axial du pied 14 de l'aube 10. Plus particulièrement, le tronçon 77a principal est incliné vers le fond du bol 58. Le tronçon 77b d'extrémité s'étend radialement vers la paroi du bol 58 depuis son extrémité de liaison avec le tronçon 77a principal. Le tronçon 77b d'extrémité est aussi incliné vers le fond du bol 58 de manière à s'étendre sensiblement parallèlement à la portion de paroi du bulbe 32 axialement en vis-à-vis. Ainsi, la griffe 77 présente un deuxième coude 83b qui est agencé à la liaison entre le tronçon 77a principal et le tronçon 77b d'extrémité.

La griffe 77 est destinée à entrer en contact avec le pied 14 par une face 85 de contact formée par la face inférieure du tronçon 77b d'extrémité. La face 85 de contact s'étend sensiblement parallèlement à la portion de paroi de bulbe 32 en vis-à-vis. Ainsi, la surface de face 85 de contact entrant en contact avec le bulbe 32 lors d'un déplacement axial de l'aube 10 est assez grande pour supporter la pression et retenir le bulbe 32 à l'intérieur du bol 58.

Lors d'un déplacement axial de l'aube 10, le bulbe 32 du pied 14 vient ainsi solliciter la griffe 77 par sa face 85 de contact, provoquant la flexion de la griffe 77 au niveau de son premier et de son deuxième coudes 83a, 83b. Le choc avec le pied 14 est ainsi susceptible d'être absorbé plus efficacement.

La griffe 77 est plus particulièrement déformable élastiquement au moins sur une partie de sa flexion. Par exemple la griffe 77 est déformable élastiquement sur la totalité de son mouvement de flexion.

En variante, la griffe 77 est déformable élastiquement sur une première partie de son mouvement de flexion, puis l'énergie transmise par le pied 14 est absorbée par déformation plastique de la griffe 77 sur la fin de son mouvement de flexion.

Selon un premier mode de réalisation de l'invention représenté à la figure 8, en position fixée du pied 14 de l'aube 10 dans le bol 58, la griffe 77 est agencée axialement à distance de la portion saillante du pied 14. Pour éviter que l'aube 10 ne prenne trop de vitesse avant que la griffe 77 ne la ralentisse lors d'une défaillance de la bague d'immobilisation, il est préférable que la distance axiale entre la griffe 77 et le bulbe 32 du pied 14 soit réduite, par exemple à moins de 2 mm.

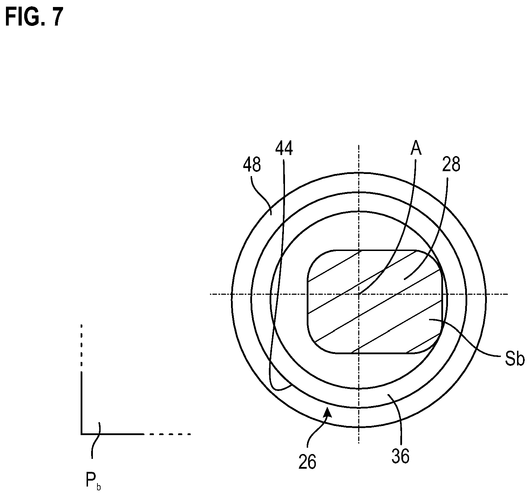

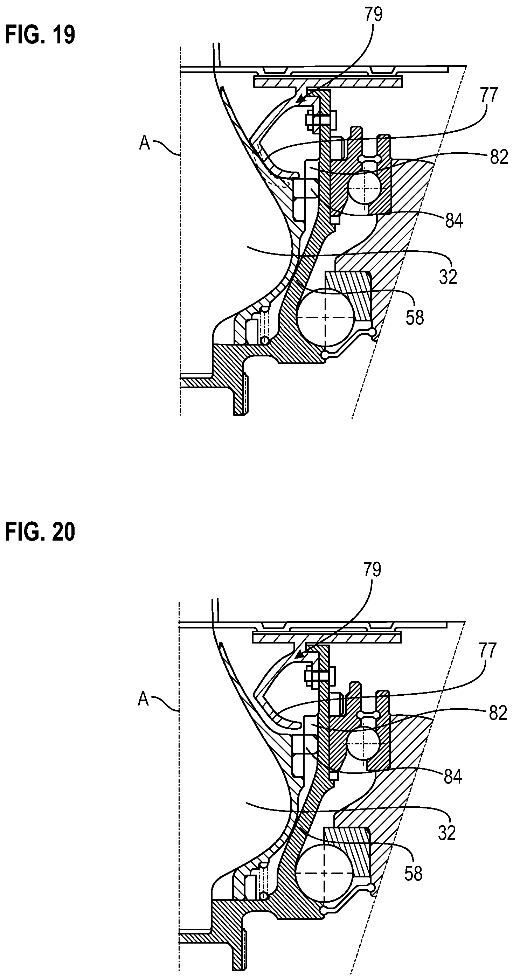

Selon un deuxième mode de réalisation de l'invention représenté à la figure 19, en position fixée du pied 14 de l'aube 10 dans le bol 58, la griffe 77 est agencée précontrainte en flexion contre la portion saillante du pied 14. A la figure 7, la position de repos de la griffe 77 est représentée en traits interrompus. On constate que la griffe 77 est ici repoussée à l'encontre de sa force de rappel élastique vers l'extérieur et vers le haut. Ce mode de réalisation permet à la griffe 77 d'absorber l'énergie cinétique de l'aube 10 dès le début de son déplacement axial, avant qu'elle n'ait pu prendre de la vitesse.

Pour améliorer l'amortissement lors du contact entre l'aube 10 et la griffe 77, la face 85 de contact de la griffe 77 peut être recouverte d'un tampon (non représenté), par exemple en matériau élastomère.

L'organe 79 de support comporte de préférence une pluralité de griffes 77 qui sont réparties régulièrement autour du pied 14 de l'aube 10 afin de répartir les efforts.

Pour faciliter son agencement dans le bol 58, l'organe 79 de support est réalisé en plusieurs secteurs 79a, 79b distincts dont chacun est fixé indépendamment au bol 58. Chaque secteur 79a, 79b peut être agencé en contact avec deux secteurs 79a, 79b adjacents, ou ils peuvent être agencés circonférentiellement à distance l'un de l'autre.

Chaque secteur 79a, 79b est équipé d'au moins une griffe 77 pour permettre de répartir l'effort de rétention de l'aube 10 sur tout le tour du bol 58.

Lorsque le support est réalisé en plusieurs secteurs 79a, 79b distincts, chaque secteur 79a, 79b est positionné radialement par appui contre une portion annulaire de la face 59b interne du bol 58. En outre, le bol 58 comporte au moins une face 87 d'épaulement qui s'étend radialement en saillie vers l'intérieur depuis sa face 59b interne pour recevoir en appui axial vers le haut chaque secteur 79a, 79b de l'organe 79 de support. Plus particulièrement, l'extrémité supérieure des pattes 81 de fixation est en appui axial contre la face 87 d'épaulement. Ainsi, chaque secteur 79a, 79b est positionné à la fois radialement et axialement de manière que chaque griffe 77 soit positionnée correctement par rapport au bulbe 32.

La face 87 d'épaulement est ici formée par la face inférieure d'un rebord 89 qui s'étend radialement vers l'intérieur depuis l'extrémité supérieure du bol 58. Comme cela sera expliqué par la suite, dans certains modes de réalisation du système 34 de calage angulaire, il est nécessaire de prévoir un passage pour insérer des pièces telle que la bague d'immobilisation. Dans ce cas, le rebord 89 ne s'étend pas de manière continue sur toute la circonférence du bol 58, mais il est formé de segments discontinus entre lesquels un espace est réservé circonférentiellement pour l'insertion desdits éléments.

Avantageusement, l'organe 79 de support comporte un plateau 91 radial de fixation d'une plateforme 93 qui est destinée à obturer l'ouverture 75 associée du carter 73 afin de conférer de meilleures performances aérodynamiques à l'hélice. Le plateau 91 de fixation est agencé à une extrémité supérieure de la patte 81 de fixation. Il s'étend ici au-dessus de l'extrémité supérieure du bol 58 de manière à pouvoir porter la plateforme 93 qui obture globalement la totalité de l'ouverture 75. Le plateau 91 s'étend ici radialement depuis une extrémité interne qui est située à proximité de l'échasse 30, au droit de l'intérieur du bol 58, jusqu'à une extrémité externe qui est située au droit de l'extérieur du bol 58. Le plateau 91 s'étend juste au-dessous du niveau du carter 73 de manière que la plateforme 93 affleure à la face extérieure du carter 73.

Le plateau 91 présente par exemple une forme d'anneau autour de l'axe "A" de calage. Le plateau 91 est par exemple réalisé en plusieurs segments pour faciliter son agencement autour du pied 14. Chaque segment peut porter au moins une griffe 77.

Ainsi, l'organe 79 de support sert non seulement de dispositif de sécurité en cas de défaillance de la bague 82 d'immobilisation, mais aussi de support pour la plateforme 93. Il est ainsi possible de réduire le nombre de pièce formant l'hélice, de réduire le poids de l'hélice, mais aussi de simplifier l'assemblage de l'hélice.

La plateforme 93 peut être réalisée en matériau métallique ou en matériau composite.

Pour ajuster la position de la plateforme 93 le long de l'axe "A" de calage afin qu'elle affleure parfaitement la face extérieure du carter 73, des cales 95 peuvent être intercalées entre la plateforme 93 et le plateau 91.

On décrit à présent l'invention mise en œuvre dans deux modes de réalisation particuliers et non limitatifs du système 34 de calage angulaire. Dans ces deux modes de réalisation, et comme expliqué précédemment, le corps 24 du pied 14 a une forme particulière mieux visible aux figures 3 à 7.

Le corps 24 comprend pour l'essentiel les trois parties précédemment décrites, à savoir :
- l'extrémité libre 28 située du côté opposé à la pale 12,
- l'échasse 30 située du côté de la pale 12, et
- le bulbe 32 situé entre l'extrémité libre 28 et l'échasse 30.

L'extrémité libre 28 présente une forme générale parallélépipédique dans l'exemple représenté. Comme on peut le voir à la figure 7, cette extrémité 28 est désaxée ou décalée par rapport à l'axe "A" de calage pour réaliser un détrompage ou indexage, comme cela sera expliqué plus en détail dans ce qui suit.

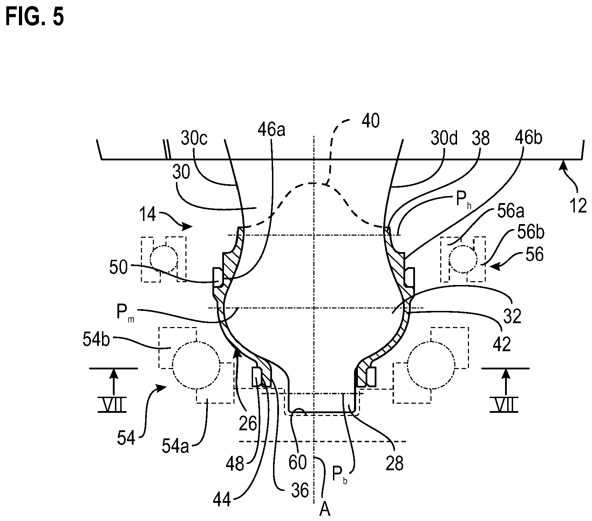

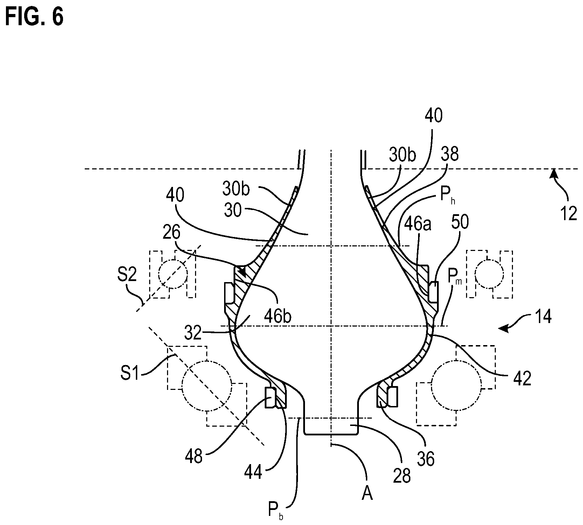

Comme représenté aux figures 5 et 6, on définit Pb comme un plan transversal, c'est-à-dire un plan perpendiculaire à l'axe "A", de calage passant sensiblement par le milieu de l'extrémité 28, mesurée le long de l'axe "A" de calage. Ce plan Pb est appelé plan bas ou inférieur. La figure 7 montre la forme en section de l'extrémité 28 dans ce plan Pb. Cette section, appelée section basse, a une valeur ou une aire, par exemple maximale, notée Sb et a une forme générale rectangulaire dans l'exemple représenté.

Comme cela sera également décrit dans ce qui suit, l'extrémité 28 est configurée pour coopérer avec un système 34 de calage de l'aube 10.

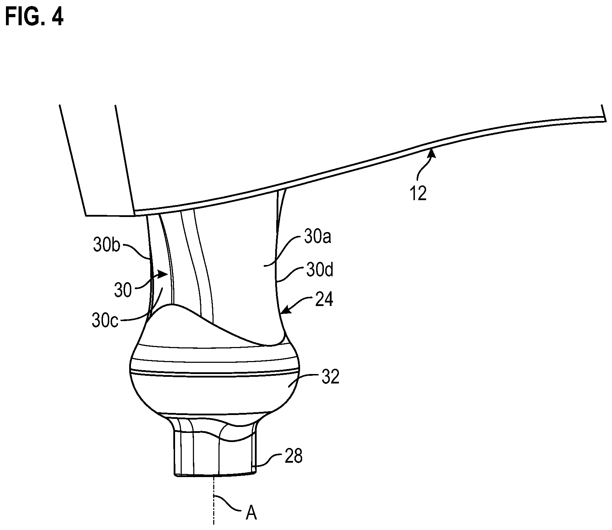

L'échasse 30 a une forme relativement complexe et peut être considérée comme comportant :
- deux flancs latéraux 30a, 30b, situés respectivement du côté de l'intrados 12a et de l'extrados 12b de la pale 12, qui convergent l'un vers l'autre le long de l'axe "A" de calage et en direction du sommet de la pale 12 (cf. figures 4 et 6), et
- deux bords, respectivement amont 30c et aval 30d, qui au contraire divergent l'un de l'autre le long de l'axe "A" de calage et en direction du sommet de la pale 12 (cf. figures 4 et 5).

On définit Ph comme un plan transversal passant par l'échasse 30, et en particulier son extrémité inférieure. Ce plan Ph est appelé plan haut ou supérieur. Dans ce plan, l'échasse peut avoir en section une forme non circulaire et par exemple ovale, oblongue, carrée ou rectangulaire. Cette section, appelée section haute, a une valeur ou une aire, par exemple maximale, notée Sh.

Le bulbe 32 a une forme générale renflée ou bombée, ce renflement ou bombement s'étendant tout autour de l'axe "A" de calage.

On définit Pm comme un plan médian passant par le bulbe 32, et en particulier dans sa partie de plus grande section transversale, qui est notée Sm. Ce plan Pm est appelé plan moyen. Dans ce plan, le bulbe 32 peut avoir en section une forme circulaire bien que cette section ne soit pas limitative.

On comprend que le plan Pm est situé entre les plans Pb et Ph. La section transversale du bulbe 32 décroit du plan Pm (Sm) jusqu'au plan Ph, ainsi que depuis le plan Pm, jusque vers le plan Pb. On comprend donc que Sm est supérieur à Sb et Sh. Par ailleurs, dans l'exemple représenté, Sh est supérieur à Sb.

Le fût 26 est ici réalisé en deux demi-coques 26a, 26b, comme cela est visible à la figure 3, qui sont rapportées et fixées sur le corps 24, par exemple l'un du côté de l'intrados 12a de la pale 12 et l'autre du côté de l'extrados 12b de la pale 12. Les demi-coques 26a, 26b sont ainsi jointes au niveau d'un plan de joint qui passe par l'axe "A" de calage et qui s'étend sensiblement parallèlement à une corde de la pale 12.

Le fût 26 est avantageusement fixé sur le corps 24, de préférence par collage. La colle s'étend entre le fût et le corps 24, tout autour de l'axe "A" de calage.

Le fût 26 est de préférence métallique (en acier, titane ou alliage de titane comme le TA6V). La colle est par exemple une colle époxy chargée en nodules thermoplastiques ou élastomères ou renforcée avec un tissu. Ce procédé d'assemblage par collage est particulièrement adapté du fait de la grande surface de contact entre la cavité du fût et le corps 24 qui peut être composite. La présence d'un joint de colle est avantageuse car il permet de rattraper de légers défauts de forme. Le joint de colle permet aussi d'éviter les frottements à l'interface métal/composite et donc d'augmenter la durée de vie de l'aube 10.

Plusieurs possibilités sont envisagées pour rapporter le fût 26 sur le corps 24. Une première possibilité est de laisser volontairement un jeu entre les deux demi-coques 26a, 26b du fût 26 une fois rapportées de manière à bien appliquer la pression lors de la polymérisation du joint de colle. La phase de polymérisation peut se faire en autoclave avec l'ensemble de l'aube 10 à l'intérieur d'une bâche à vide. Mais, il est également possible de réaliser cette opération sous presse. Cependant, l'inconvénient de laisser un jeu entre les deux demi-coques 26a, 26b est de moins maîtriser leur positionnement et donc de devoir réaliser une reprise en usinage de la surface externe.

Une deuxième possibilité est de rapporter les demi-coques l'une contre l'autre autour du corps 24 sans jeu existant. Cette stratégie est possible, par exemple en usinant un brut déjà découpé en deux parties et maintenues ensemble pendant l'opération d'usinage afin d'assurer la géométrie des surfaces externes une fois les demi-coques réassemblées. Cela permet de maitriser le positionnement et la géométrie de la surface externe du fût 26 sans avoir besoin d'un usinage supplémentaire après collage. Dans tous les cas, des pions de positionnement ou des butées peuvent être envisagés pour assurer la position relative des demi-coques du fût.

La présence d'un joint de colle entre le corps 24 et le fût n'est toutefois pas obligatoire bien qu'elle soit très avantageuse. Une alternative est d'utiliser des rondelles (ou ressorts) de précontrainte entre le fût et le corps 24 composite afin de pousser radialement le corps 24 et le plaquer sur les portées du fût. On peut également jouer sur la géométrie du fût pour faire en sorte de légèrement « pincer » le corps 24 lorsque les deux demi-coques du fût sont rapportées autour du bulbe 32. Dans ce cas, c'est la déformation du fût qui génère une précontrainte. Il faut donc prévoir un outillage pour maintenir cette position avant assemblage final.

Comme cela est visible aux figures 5 et 6, le fût 26 recouvre et épouse au moins une partie du bulbe 32 et de l'échasse 30, et a une forme complémentaire en section du bulbe 32, au niveau de la section milieu Sm, et de l'échasse 30, au niveau de la section haute Sh.

Plus précisément, le fût 26 comprend trois parties dans l'exemple représenté :
- une extrémité inférieure 36 qui a une forme générale annulaire (cf. figures 5-7) et qui s'étend au niveau et autour de l'extrémité libre 28 du pied 14,
- une extrémité supérieure 38 qui s'étend au niveau du plan Ph et qui comprend deux lèvres latérales 40 appliquées sur les flancs 30a, 30b de l'échasse 30, et
- une partie médiane 42 appliquée sur le bulbe 32 et épousant de près sa forme.

Les lèvres 40 prennent appui sur les flancs 30a, 30b de l'échasse 30 et permettent de rigidifier le pied 14 de l'aube 10 et de renforcer sa résistance à la torsion autour de l'axe de calage A.

Ils permettent en outre d'absorber de l'énergie en cas d'impact sur l'aube 10, comme par exemple l'ingestion d'un oiseau. Des congés peuvent présents sur ces lèvres pour éviter l'usure ou l'endommagement local du corps 24.

Les surfaces internes du fût 26 qui sont en contact avec le corps 24 servent de portées. Par rapport à une attache brochée, la surface de portée est maximisée par l'exploitation de l'ensemble de la circonférence du bas de l'aube 10. Sur une attache brochée, seules deux surfaces distinctes du pied 14 d'aube 10, respectivement situées à l'intrados et à l'extrados sont en appui sur des portées alors que les surfaces du pied 14 d'aube 10 situées au bord d'attaque et au bord de fuite sont libres. Toujours en comparaison avec une attache brochée, la hauteur des portées dans la direction radiale est bien plus importante ce qui contribue également à augmenter considérablement leur surface. Cette grande surface d'appui permet de diminuer la pression de contact quel que soit le cas de fonctionnement.

Le fût 26 comprend deux surfaces cylindriques 44, 46a de montage de bagues de frettage 48, 50. Les bagues de frettage 48, 50 permettent de maintenir les demi-coques 26a, 26b serrées l'une contre l'autre et sur le corps 24. Les bagues de frettage 48, 50 s'étendent autour de l'axe "A" de calage.

La surface 44 est située sur l'extrémité inférieure 36 et est orientée radialement vers l'extérieur par rapport à l'axe "A" de calage. Elle reçoit la bague 48 par frettage qui est engagée depuis le bas et prend appui axialement sur une portée cylindrique située à la jonction de l'extrémité 36 et de la partie médiane 42 du fût 26.

La surface 46a est située sur la partie médiane 42 et est orientée radialement vers l'extérieur par rapport à l'axe "A" de calage. Elle reçoit la bague 50 par frettage qui est engagée depuis le haut et prend appui axialement sur une portée cylindrique située à proximité du plan Pm.

On constate que la surface 46a est située juste à côté d'une surface cylindrique 46b qui est destinée à recevoir une bague d'immobilisation 52, comme cela sera décrit dans ce qui suit.

Les surfaces 44, 46a, ainsi que les bagues 48, 50, ont des diamètres différents dans l'exemple représenté. La surface 46a a un diamètre supérieur à celui de la surface 44 et donc la bague 50 présente un diamètre supérieur à celui de la bague 48.

Les surfaces 46a, 46b peuvent avoir des diamètres identiques ou différents. La surface 46b peut par exemple avoir un diamètre légèrement inférieur à celui de la surface 46a. C'est notamment le cas où la bague 50 devrait être monté avec un jeu radial prédéterminé par rapport à cette surface 46b.

Les figures 5 et 6 permettent de constater que la bague 50 est située entre les plans Ph et Pm, et que la bague 48 est située entre les plans Pm et Ps.

Les figures 5 et 6 montrent également la position des bagues 48, 50 et des plans Pm, Ph, Ps par rapport à des paliers à roulement 54, 56 qui s'étendent autour de l'axe "A" de calage et du pied 14.

Les paliers 54, 56 sont ici au nombre de deux et sont respectivement un palier inférieur 54 et un palier supérieur.

Les paliers 54, 56 sont du type à roulement à billes. Dans l'exemple représenté, ils ont des diamètres différents et leurs billes ont également des diamètres différents.

Le palier 54 s'étend sensiblement entre les plans Pm et Pb et donc autour d'une partie inférieure du bulbe 32. Il s'étend également autour de la bague 48. Ce palier 54 a un diamètre plus petit que l'autre palier 56, et ses billes ont un diamètre supérieur à celles de l'autre palier 56.

Le palier 54 est en outre à contact oblique. Dans l'exemple représenté, les points ou surfaces d'appui des billes sur les chemins de roulement de leurs bagues 54a, 54b sont situés sur une surface tronconique S1 qui s'étend le long de l'axe "A" de calage et dont le plus grand diamètre est situé du côté du sommet de l'aube 10.

Le palier 56 s'étend sensiblement entre les plans Pm et Ph et donc autour d'une partie supérieure du bulbe 32. Il s'étend également autour de la bague 50. Le palier 56 est en outre à contact oblique. Dans l'exemple représenté, les points ou surfaces d'appui des billes sur les chemins de roulement de leurs bagues 56a, 56b sont situés sur une surface tronconique S2 qui s'étend le long de l'axe "A" de calage et dont le plus grand diamètre est situé du côté de l'extrémité libre du pied 14 de l'aube 10.

La position de la section milieu entre les deux paliers 54, 56 est très avantageuse en termes d'encombrement radial car une partie de la hauteur de portée entre la section milieu et la section haute se situe à l'intérieur du bol 58, contrairement à l'état de l'art sur les attaches brochées intégrées dans un pivot. Cela contribue à diminuer l'encombrement radial du système 34 de calage.

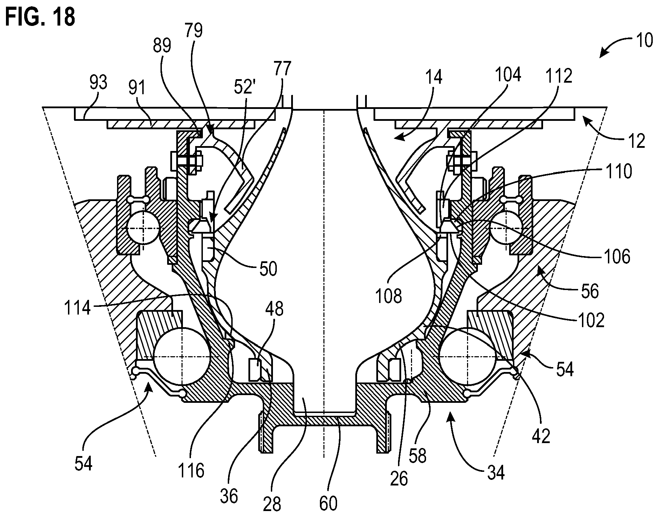

Les figures 8 à 17 illustrent un premier mode de réalisation du système 34 de calage angulaire et en particulier de la bague d'immobilisation 52, et la figure 18 illustre une variante de réalisation du système 34 de calage angulaire et de cette bague.

Le système 34 de calage angulaire comprend un bol 58 comportant une paroi annulaire 58a s'étendant autour de l'axe "A" de calage. Cette paroi 58a comporte une extrémité axiale inférieure fermée par une paroi de fond 58b, et une extrémité axiale supérieure ouverte et configurée pour autoriser le montage du pied 14 de l'aube 10 à l'intérieur du bol 58.

La paroi de fond 58b est configurée pour coopérer par complémentarité de formes avec l'extrémité libre du pied 14, et donc avec l'extrémité 28 du corps 24, de façon à ce que le bol 58 soit solidarisé en rotation avec le pied 14 autour de l'axe.

Dans le cas présent, on comprend que la paroi de fond 58b comprend un évidement 60 ayant une section transversale non circulaire, et en particulier rectangulaire, et configuré pour recevoir l'extrémité 28 (figure 8). Comme on le voit à la figure 5, cet évidement 60 est excentré par rapport à l'axe "A" de calage de façon analogue à l'extrémité 28 (cf. figure 7). Cet excentrement permet un indexage et un détrompage lors de l'insertion et du montage du pied 14 dans le bol 58, une seule position d'engagement de l'extrémité 28 dans l'évidement 60 étant possible.

L'évidement 60 est situé sur une face supérieure ou interne de la paroi de fond 58b du bol 58, qui est donc située à l'intérieur du bol 58 et orientée du côté du pied 14.

Le système 34 de calage angulaire génère un couple au pied 14 d'aube 10 qui s'oppose au moment de torsion issu des efforts aérodynamiques et des efforts centrifuges. L'extrémité 28 du pied 14 pourrait être enveloppée dans le fût 26, comme le reste du corps 24 du pied 14. Dans ce cas, celui-ci aurait également une forme non circulaire afin de contraindre sa rotation. Cependant, il est avantageux de laisser sortir cette extrémité du corps 24 en dehors du fût, comme évoqué dans ce qui précède, afin de contraindre directement la rotation du corps 24. On obtient ainsi un chemin d'effort plus direct, le moment de torsion s'appliquant directement sur le corps 24. La section basse possède des dimensions strictement inférieures à la dimension maximale de la section milieu afin de limiter l'encombrement circonférentiel à cette hauteur. En conséquence, le fût possède également un encombrement circonférentiel plus faible à cette hauteur qu'au niveau de la section milieu. Cela permet de diminuer le diamètre du palier inférieur qui se situe sous la section milieu. Donc, le pied 14 d'aube 10 peut être intégré plus bas radialement ce qui diminue fortement le rapport de moyeu théorique associé à l'intégration du pied 14. Or, l'homme du métier sait qu'un rapport de moyeu faible améliore les performances du moteur, notamment car celui-ci est plus compact et donc plus léger. Ce dernier point est un avantage très important de la solution technique comparée à la concurrence qui propose classiquement des fûts de forme externe cylindrique.

La paroi de fond 58b comprend une face inférieure ou externe, qui est située du côté opposé au pied 14, et qui comprend un prolongement cylindrique 62 s'étendant le long de l'axe "A" de calage et comportant un filetage externe ou des cannelures rectilignes externes 64 pour l'accouplement en rotation du système 34 de calage angulaire avec un mécanisme de changement de pas qui n'est pas illustré et qui est commun aux différents systèmes 34 de calage angulaire et aubes 10 de l'hélice.

Un organe 66 élastiquement déformable, tel qu'un ressort hélicoïdal, s'étend autour de l'axe "A" de calage et est monté à l'intérieur du bol 58. Cet organe 66 prenant appui axialement sur la surface supérieure de la paroi de fond 58b, à la périphérie externe de cette surface dans l'exemple représenté, et est configuré pour solliciter axialement le pied 14 de l'aube 10 vers l'extérieur du bol 58 c'est-à-dire du côté du sommet de l'aube 10.

L'organe 66 prend appui sur une portée cylindrique 68 du fût 26. Dans l'exemple représenté, l'organe 66 est centré par engagement de son extrémité supérieure sur et autour d'un rebord cylindrique 70 du fût, et par engagement de son extrémité inférieure sur et autour d'un rebord cylindrique du bol 58 situé à la périphérie externe de la paroi de fond 58b.

L'organe 66 s'étend ici autour de la bague de frettage 48.

Comme on le voit à la figure 8, le bol 58 est conçu pour supporter les paliers 54, 56 qui assurent le centrage et le guidage du bol 58 autour de l'axe "A" de calage vis-à-vis du moyeu 72.

Les paliers 54, 56 peuvent faire partie du système 34 de calage angulaire. En particulier, au moins l'un des paliers de guidage peut avoir sa bague interne qui est intégrée au bol 58.

C'est ici le cas du palier inférieur 54 qui a sa bague interne 54a intégrée au bol 58. En pratique, cela signifie que le bol 58 comprend un chemin de roulement 54aa à sa périphérie externe sur laquelle roule directement les billes du palier 54. Ce chemin de roulement comprend une surface annulaire à section incurvée concave. Ce chemin de roulement est ici située à l'extrémité inférieure du bol 58 et de la paroi 58a. La bague externe 54b du palier 54 est fixée au moyeu 72, par exemple par frettage. Par ailleurs, le bol 58 est avantageusement conçu pour appliquer une précontrainte au palier 54.

La bague externe 56b du palier 56 est fixée au moyeu 72, par exemple par frettage. Sa bague interne 56a est engagée sur et autour de l'extrémité supérieure libre du bol 58 et de la paroi 58a. Cette extrémité de la paroi 58a comprend une surface cylindrique externe 76 de montage de la bague interne 56a ainsi qu'un filetage externe de vissage d'un écrou 78 destiné à prendre appui axialement sur la bague interne 56a pour la maintenir serrée axialement contre un épaulement cylindrique externe 80 du bol 58.

La paroi 58a du bol 58 comprend en outre dans sa face 59b interne des moyens configurés pour coopérer avec la bague d'immobilisation 52 précitée.

La bague d'immobilisation 52 s'étend autour de l'axe "A" de calage et est configurée pour être montée autour du pied 14. Cette bague d'immobilisation 52 est configurée pour être montée à l'intérieur du bol 58 et pour coopérer respectivement avec le pied 14 et la paroi annulaire 58a du bol 58 afin d'assurer la rétention axiale du pied 14 dans le bol 58.

Dans le mode de réalisation des figures 8 à 17, cette bague d'immobilisation 52 est une bague de crabotage qui comporte des dents externes 84 de crabot configurées pour coopérer avec des dents internes 82 de crabot complémentaires de la paroi annulaire 58a du bol 58.

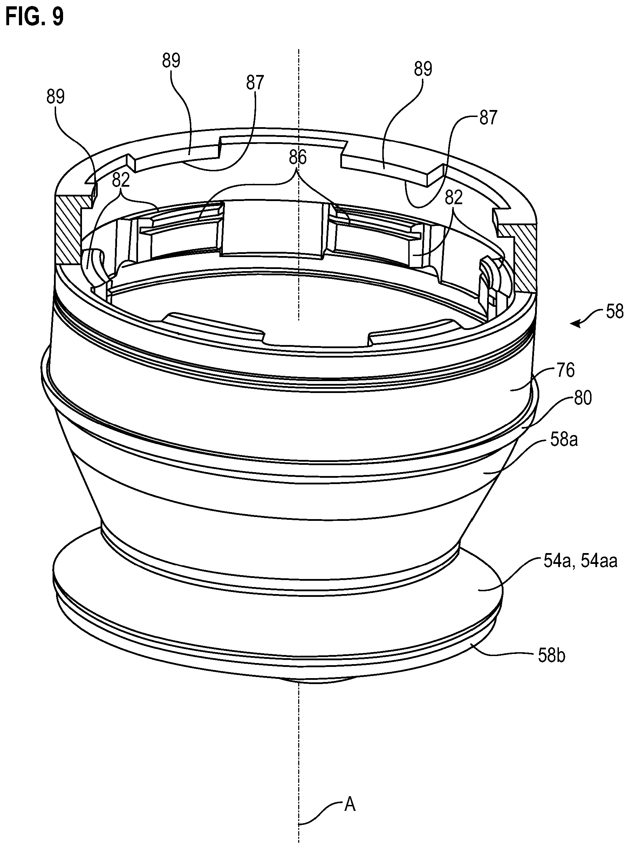

Les dents 82 du bol 58 sont mieux visibles à la figure 9. Ces dents sont régulièrement espacées autour de l'axe "A" de calage. Elles sont au nombre de six dans l'exemple non limitatif représenté. Elles ont par exemple chacune une extension angulaire autour de l'axe "A" de calage, comprise entre 20 et 30° environ.

Chacune des dents 82 comprend à sa périphérie interne une rainure 86 orientée circonférentiellement par rapport à l'axe "A" de calage. Les rainures 86 des dents 82 forment une gorge discontinue autour de l'axe "A" de calage.

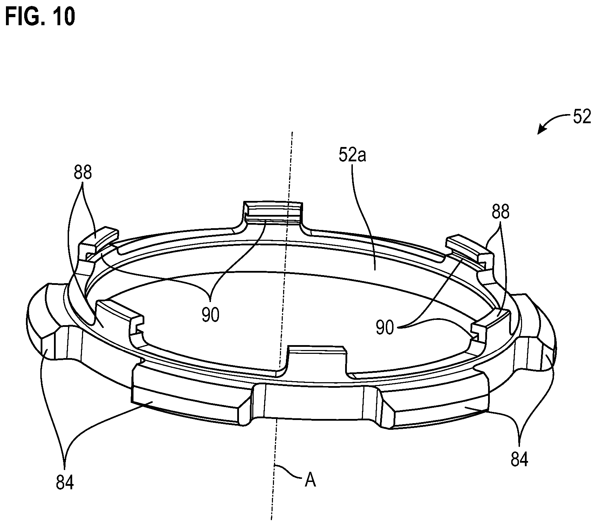

La bague de crabotage est mieux visible à la figure 10. Ses dents 84 sont régulièrement espacées autour de l'axe "A" de calage. Elles sont au nombre de six dans l'exemple non limitatif représenté. Elles ont par exemple chacune une extension angulaire autour de l'axe "A" de calage, comprise entre 20 et 30° environ.

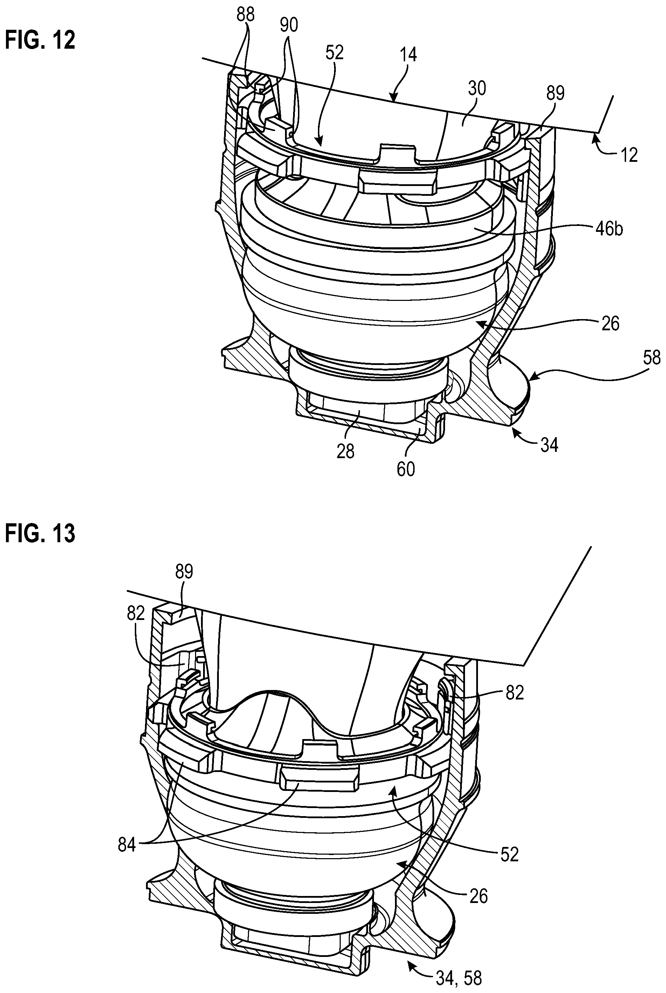

Les dents 84 sont complémentaires des dents 82 et sont configurées pour coopérer par crabotage avec ces dents 82. Le crabotage est un mode de montage bien connu dans le domaine aéronautique et qui sera illustré par les figures 12 à 17 illustrant un procédé de montage.

Comme expliqué précédemment, et comme représenté à la figure 9, dans ce cas, le rebord 89 du bol 58 est réalisé par segments qui sont écartés circonférentiellement les uns des autres de manière à permettre le passage des dents 84 de la bague 52. Les segments du rebord 89 ne sont pas nécessairement agencés en coïncidence avec les dents 82 du bol 58, ils peuvent être décalés angulairement. Ceci permet par exemple de constituer un moyen pour retenir la bague 52 à l'intérieur du bol 58 en cas de retrait accidentel de la bague 52. Aux figures 12 à 17, la partie du bol 58 comportant le rebord 89 n'a pas été représentée pour permettre de mieux voir et expliquer le fonctionnement du système 34 de calage angulaire.

La bague 52 comprend une surface cylindrique interne 52a destinée à coopérer par glissement avec la surface 46b précitée du fût 26.

La bague 52 comprend une seconde série de dents 88, qui s'étendent axialement vers le haut, du côté du sommet de l'aube 10 depuis une face supérieure 89 de la bague 52. Ces dents 88 sont également régulièrement espacées autour de l'axe "A" de calage. Elles sont au nombre de six dans l'exemple représenté. Elles peuvent être disposées en quinconce vis-à-vis des dents 84, c'est-à-dire que les dents 88 sont alignées axialement avec les espaces circonférentiels situées entre les dents 84. A titre d'exemple non limitatif, les dents 88 ont chacune une extension angulaire autour de l'axe "A" de calage, comprise entre 10 et 20° environ.

Chacune des dents 88 comprend à sa périphérie interne une rainure 90 orientée circonférentiellement par rapport à l'axe "A" de calage. Les rainures 90 des dents 88 forment une gorge discontinue autour de l'axe "A" de calage.

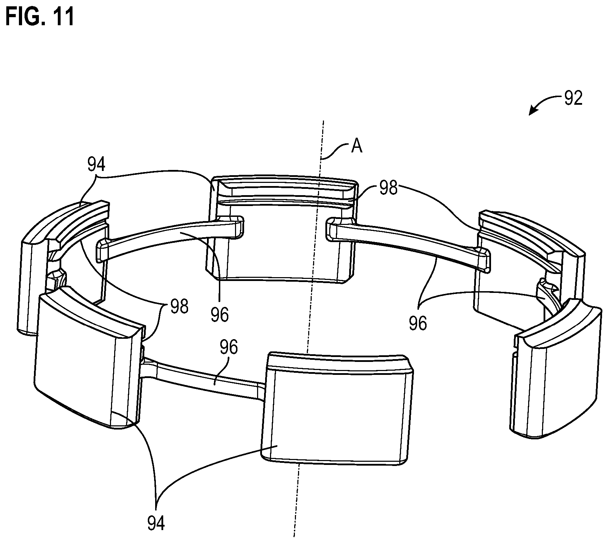

La figure 11 montre un anneau de verrouillage 92 qui est configuré pour être engagé axialement entre les dents 82, 84 de crabot pour empêcher la rotation de la bague 52 à l'intérieur du bol 58.

Cet anneau 92 comprend des patins 94, ici au nombre de six dans l'exemple non limitatif représenté, destinés à être engagés dans les espaces inter-dents s'étendant entre les dents 82 et 84. On comprend donc que ces patins 94 ont des formes complémentaires à celles de ces espaces et sont régulièrement espacés autour de l'axe "A" de calage.

Dans l'exemple représenté, les patins 94 sont solidaires les uns des autres par des pontets 96 s'étendant circonférentiellement entre les patins 94. Les pontets 96 sont au nombre de cinq et s'étendent chacun entre deux patins 94 adjacents. Deux des patins 94 ne sont volontairement pas reliés ensemble par un pontet de façon à ce que l'anneau 92 soit ouvert. Cela peut simplifier le montage par écartement ou rapprochement de ces patins l'un de l'autre, lors du montage de l'anneau dans le système 34 de calage angulaire.

Chacun des patins 94 comprend à sa périphérie interne une rainure 98 orientée circonférentiellement par rapport à l'axe "A" de calage. Les rainures 98 des patins 94 forment une gorge discontinue autour de l'axe "A" de calage.

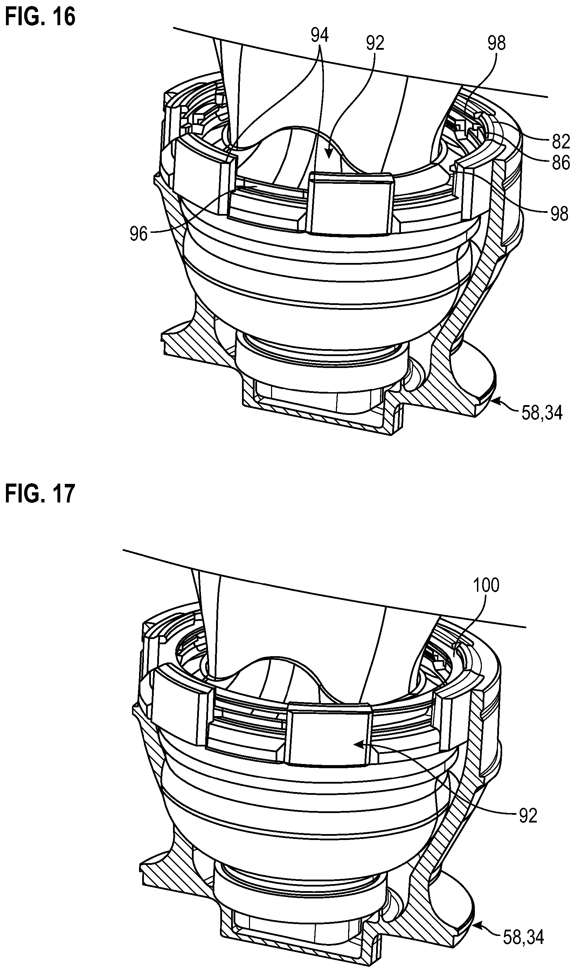

Le système 34 de calage angulaire comprend en outre un jonc annulaire 100 qui est seulement visible à la figure 17.

Le jonc 100 est monté dans le bol 58 pour bloquer axialement l'anneau de verrouillage 92 dans le bol 58. Le jonc 100 peut également être fendu ou ouvert pour faciliter son montage et est destiné à être engagé dans les rainures 86 des dents 82 du bol 58 ainsi que les rainures 98 des patins 94 de l'anneau 92, lorsque ces rainures 86, 98 sont toutes situées ans un même plan perpendiculaire à l'axe "A" de calage et sont disposées circonférentiellement les unes par rapport aux autres pour former une gorge complète autour de l'axe "A" de calage (cf. figures 16 et 17).

On se réfère maintenant aux figures 12 à 17 qui illustrent un procédé de montage de l'ensemble formé par une aube 10 telle qu'illustrée à la figure 1 et un système 34 de calage angulaire tel que représenté à la figure 8.

Dans la première étape illustrée à la figure 12, le pied 14 de l'aube 10 est engagé dans le bol 58 du système 34 de calage angulaire par translation axiale le long de l'axe "A" de calage, jusqu'à ce que l'extrémité 28 du corps 24 du pied 14 s'engage dans l'évidement 60 du bol 58. Comme on le voit dans le dessin, la bague de frettage est déjà montée prisonnière autour de l'échasse 30 du corps 24 du pied 14. Bien qu'il ne soit pas représenté dans cette figure, l'organe 66 (figure 8) est comprimé lors de l'insertion du pied 14 dans le bol 58.

Dans la seconde étape illustrée par les figures 12 et 13, la bague de frettage est positionnée angulairement autour de l'axe "A" de calage de façon à ce que ses dents 84 soient alignées avec les espaces situés entre les dents 82 du bol 58. La bague 52 est alors déplacée en translation axiale à l'intérieur du bol 58 jusqu'à ce que la bague 52 soit engagée sur la surface 46b du fût 26 et que les dents 84 soient situées juste en dessous des dents 82, comme illustré à la figure 13. Les rainures 90 prévues sur les dents peuvent servir à la préhension de la bague 52 par un outil approprié.

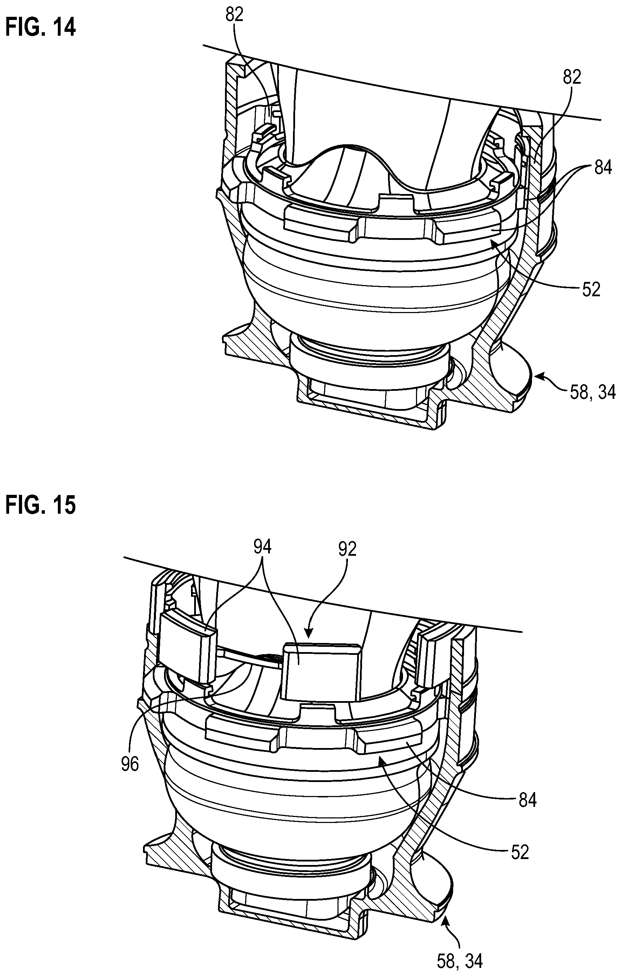

Dans la troisième étape illustrée par les figures 13 et 14, la bague 52 est déplacée en rotation autour de l'axe "A" de calage de façon à ce que ces dents 82, 84 soient alignées axialement les unes avec les autres. Du fait de l'extension angulaire des dents dans l'exemple représenté, ce déplacement angulaire est ici de l'ordre de 25-30°. Les dents 88 peuvent servir à la préhension de la bague 52 et à sa rotation par l'outil précité. L'organe 66, non représenté, sollicite axialement le pied 14 vers l'extérieur du bol 58, ce qui provoque l'appui axial des dents 84 sur les dents 82. Le pied 14 est ainsi maintenu axialement à l'intérieur du bol 58 et du système 34 de calage angulaire. En fonctionnement, les efforts centrifuges appliqués sur l'aube 10 sont transmis par les dents 82, 84 au bol 58, ces efforts étant directement repris par le palier 54 dont la bague interne 54a est intégré au bol 58.

Dans la quatrième étape illustrée par les figures 15 et 16, l'anneau 92 est positionné angulairement autour de l'axe "A" de calage de façon à ce que ses patins 94 soient alignés avec les espaces situés entre les dents 82, 84. L'anneau 92 est alors déplacé en translation axiale à l'intérieur du bol 58 jusqu'à ce que les patins 94 soient engagés dans ces espaces. Les pontets 96 peuvent alors prendre appui sur les dents 84 de la bague 52. L'anneau 92 empêche ainsi toute rotation de la bague 52 à l'intérieur du bol 58.

Dans la dernière étape illustrée par la figure 17, le jonc 100 est engagé dans les rainures 86, 98 alignées circonférentiellement les unes avec les autres. Le jonc 100 empêche un démontage accidentel de l'anneau 92.

Les secteurs 79a, 79b de l'organe 79 de support sont ensuite positionnés dans le bol 58. Chaque secteur 79a, 79b est introduit dans l'espace "E" réservé radialement entre la paroi 58a du bol 58 et l'échasse 30. Chaque secteur 79a, 79b est ensuite positionné en étant plaqué radialement contre la face 59b annulaire interne du bol 58 et axialement vers le haut contre la face 87 d'épaulement du rebord 89. Puis les secteurs 79a, 79b sont fixés dans cette position, par exemple au moyens de vis et d'écrous sertis.

Selon le mode de réalisation représenté à la figure 8, les griffes 77 s'étendent axialement au-dessus du bulbe 32 mais elles ne s'étendent pas au-dessus de la bague 52 d'immobilisation.

En variante représentée à la figure 20, l'extrémité libre des griffes 77 s'étend axialement en vis-à-vis de la surface supérieure de la bague 52 d'immobilisation. Ainsi, les griffes 77 participent aussi à la rétention de la bague 52 d'immobilisation à l'intérieur du bol 58.

On comprend que le démontage de l'aube 10 est réalisé en réalisant les étapes précitées dans l'ordre inverse. On comprend également qu'une des étapes essentielles du montage et du démontage du pied 14 concerne la bague d'immobilisation 52. Cette bague 52 est manipulable depuis l'extérieur d'une turbomachine, ce qui est particulièrement avantageux lors d'une opération de maintenance. Une aube 10 peut être démontée et retirée de l'hélice par démontage et retrait d'un nombre minimum de pièces.

On se réfère à la figure 18 qui illustre une variante de réalisation de la bague d'immobilisation 52'. Cette bague 52' a en section transversale une forme de coin et est configurée, sous l'effet des forces centrifuges en fonctionnement, pour être sollicitée axialement vers l'extérieur du bol 58 et pour maintenir serré axialement le pied 14 d'aube 10 par effet de coin.

Dans l'exemple représenté, la bague 52' a en demi-section axiale une forme générale trapézoïdale et comprend une surface inférieure 102 et deux surfaces latérales, respectivement interne 104 et externe 106. Les surfaces 102-106 sont annulaires et s'étendent autour de l'axe "A" de calage.

La bague 52' est engagée autour du pied 14 et dans le bol 58 et prend appui axialement par sa surface 102 sur la bague de frettage 50, ici par l'intermédiaire d'une rondelle 108.

La surface externe 106 de la bague coopère par appui et glissement axial avec une bague complémentaire 110 montée à l'intérieur du bol 58 et autour de la bague 52'.

La bague 52' est sectorisée et formée de plusieurs secteurs agencés autour de l'axe "A" de calage avec une certaine distance circonférentielle les uns des autres. A titre d'exemple non limitatif, les secteurs sont au nombre de six et régulièrement réparties autour de l'axe "A" de calage.

Enfin, un écrou 112 est vissé sur un filetage interne de l'extrémité supérieure du bol 58 et coopère par appui et glissement axial avec la surface interne 104 de la bague 52'.

Le vissage et le serrage de l'écrou 112 provoque à la fois un déplacement axial des secteurs de la bague 52' en appui sur la rondelle 108, et une sollicitation radiale de ces secteurs contre la bague 110 de forme complémentaire. Tout jeu de montage est alors supprimé.

Le fut 26 comprend un épaulement cylindrique 114 en appui contre un épaulement cylindrique 116 complémentaire du bol 58, ici à la jonction entre la partie médiane 42 et l'extrémité inférieure du fût 26. L'intérêt de cette variante est notamment de reprendre les efforts centrifuges afin de réaliser la rétention de l'aube 10 mais aussi de remplacer l'organe 66 précité en appliquant directement une précontrainte entre le fût 26 et donc le pied 14 de l'aube 10, et la bague intérieure 54a du palier 54.

L'organe 79 de support comportant les griffes 77 et supportant le plateau 95 est bien entendu applicable à ce mode de réalisation, comme représenté à la figure 18.

D'autres variantes de réalisation non représentées sont envisageables, parmi lesquelles :
les demi-coques 26a, 26b du fût 26 peuvent être rapportées sur le corps 24 par boulonnage, rivetage, soudure, etc. ;
la colle de liaison du fût 26 au corps 24 peut être une colle époxy mais il peut également s'agir d'un élastomère ou d'une colle thermoplastique. Il est également possible d'utiliser un film antiadhésif pour laisser la possibilité d'un mouvement relatif en limitant l'usure par frottement ;
toujours à propos de l'interface fût / corps 24, on peut aussi combiner plusieurs solutions techniques ensemble parmi celles proposées (collage, précontrainte par rondelles ou ressorts, précontrainte par la géométrie du fût) ; ces solutions sont combinables indépendamment de l'existence d'un jeu entre les deux parties du fût ;
bien que cela soit moins avantageux, la position radiale du palier assurant la rétention au centrifuge de l'aube 10 peut être inversée avec la position radiale du palier qui assure la reprise des moments de flexion issus des efforts aérodynamiques et centrifuges.

Dans tous ces modes de réalisation, lorsque la bague 52, 52' d'immobilisation n'est plus en état d'immobiliser le pied 14 d'aube 10, le bulbe 32 se déplace axialement vers l'extérieur selon l'axe "A" de calage. Le bulbe 32 entre en contact avec les griffes 77 de manière à provoquer leur déformation, ce qui ralenti suffisamment l'aube 10 qui peut être retenue à l'intérieur du bol 58 par les griffes 77 ainsi déformées. Les efforts centrifuges exercés par l'aube 10 sont transmis au moyeu en passant par la patte 81 de fixation qui est en appui axial contre la face 87 d'épaulement qui transmet ainsi l'effort centrifuge au bol 58 qui transmet lui-même l'effort au moyeu 72 via les paliers 54, 56 de roulement. De cette manière, l'effort centrifuge ne passe avantageusement pas par les vis de fixation des organes 79 de support qui sont reçues avec un jeu radial suffisant dans leurs orifices respectifs.

## Revendications

1. Ensemble comportant une aube (10) d'hélice non carénée et un système (34) de calage angulaire de l'aube (10), pour une turbomachine d'aéronef, qui comporte :
- une aube (10) comportant un pied (14) qui est destiné à être attaché à un moyeu (72) de l'hélice et qui est destiné à être reçu dans une ouverture (75) associée d'un carter (73) externe de moyeu (72), le pied (14) présentant une portion en forme de bulbe (32) ;
- un système (34) de calage angulaire de l'aube (10) autour d'un axe (A) de calage, le système (34) de calage angulaire comportant un bol (58) qui est destiné à être agencé à l'intérieur du carter (73) externe, qui comporte une extrémité supérieure ouverte évasée pour l'insertion axiale du pied (14) dans une paroi (58a) annulaire du bol (58), et dans lequel le pied (14) de l'aube (10) est fixé axialement par un organe (52) d'immobilisation qui est fixé au bol (58), le bol (58) de réception étant destiné à être monté pivotant autour de l'axe (A) de calage par rapport au moyeu (72) ;
-- au moins une griffe (77) de rétention qui s'étend radialement depuis la paroi (58a) du bol (58) dans un espace (E) radial réservé entre la paroi (58a) du bol (58) et le pied (14), la griffe (77) étant agencée axialement en vis-à-vis du bulbe (32), la griffe (77) étant susceptible de retenir le pied (14) de l'aube (10) à l'intérieur du bol (58) par contact avec le bulbe (32) en cas de défaillance de l'organe de fixation du pied (14) dans le bol (58),
**caractérisé en ce que** l'ensemble comprend en outre :
- une plateforme (93) destinée à obturer l'ouverture (75) associée du carter (73),
et **en ce que** la griffe (77) est réalisée en une pièce avec un organe (79) de support qui est rapporté et fixé au bol (58), et qui comporte un plateau (91) radial de fixation de ladite plateforme (93), le plateau (91) s'étendant au-dessus d'un bord d'extrémité supérieure du bol (58).

2. Ensemble selon la revendication précédente, **caractérisé en ce que** l'organe (79) de support comporte une patte (81) axiale de fixation qui est fixée contre une face (59b) interne du bol (58) et depuis laquelle la griffe (77) s'étend radialement.

3. Ensemble selon la revendication 2, **caractérisé en ce que** le plateau (91) de fixation est agencé à une extrémité supérieure de la patte (81) de fixation.

4. Ensemble selon l'une quelconque des revendications précédentes, **caractérisé en ce que** la griffe (77) est susceptible de fléchir pour amortir un déplacement du pied (14) de l'aube (10) axialement en cas de défaillance de l'organe (52) d'immobilisation du pied (14) dans le bol (58).

5. Ensemble selon la revendication précédente, **caractérisé en ce que** la griffe (77) présente un tronçon (77a) principal dirigée radialement vers l'intérieur depuis la patte (81) de fixation et un tronçon (77b) d'extrémité recourbé radialement vers l'extérieur pour favoriser la déformation de la griffe (77) en cas de déplacement axial du pied (14) de l'aube (10).

6. Ensemble selon l'une quelconque des revendications 4 et 5, **caractérisé en ce que** la griffe (77) est déformable élastiquement en flexion sur au moins une partie de son mouvement de flexion.

7. Ensemble selon l'une quelconque des revendications précédentes, **caractérisé en ce qu'**en position fixée du pied (14) de l'aube (10) dans le bol (58), la griffe (77) est agencée axialement à distance du bulbe (32) du pied (14).

8. Ensemble selon l'une quelconque des revendications 1 à 6, **caractérisé en ce qu'**en position fixée du pied (14) de l'aube (10) dans le bol (58), la griffe (77) est agencée précontrainte en flexion contre le bulbe (32) du pied (14).

9. Ensemble selon l'une quelconque des revendications précédentes, **caractérisé en ce que** l'organe (79) de support comporte une pluralité de griffes (77) qui sont réparties régulièrement autour du pied (14) de l'aube (10).

10. Ensemble selon l'une quelconque des revendications précédentes, **caractérisé en ce que** l'organe (79) de support est réalisé en plusieurs secteurs (79a, 79b) distincts dont chacun est fixé indépendamment au bol (58).

11. Ensemble selon l'une quelconque des revendications précédentes, **caractérisé en ce que** le bol (58) comporte une face (87) d'épaulement qui s'étend radialement en saillie vers l'intérieur depuis une face (59b) interne du bol (58) et qui reçoit en appui axial vers le haut l'organe (79) de support.

12. Ensemble selon la revendication précédente, **caractérisé en ce que** l'organe (79) de support est fixé au bol (58) par l'intermédiaire d'une vis (97) de fixation qui est reçue dans des orifices (101) de passage présentant un diamètre supérieure au diamètre de sa tige, la vis (97) étant vissée dans un écrou (99) monté avec un débattement radial dans l'orifice (101) du bol (58) ou dans l'orifice (101) de l'organe (79) de fixation afin que des efforts axiaux appliqués à la griffe (77) vers le haut passent uniquement par la face (87) d'épaulement contre laquelle l'organe (79) de fixation est en appui.

13. Ensemble selon l'une quelconque des revendications précédentes, **caractérisé en ce que** l'organe d'immobilisation est formé par une bague d'immobilisation (52, 52') qui s'étend autour dudit axe (A) et qui est configurée pour être montée autour du pied (14), cette bague d'immobilisation (52, 52') étant configurée pour être montée à l'intérieur du bol (58) et pour coopérer respectivement avec le pied (14) et la paroi annulaire (58a) du bol (58) afin d'assurer la rétention axiale du pied (14) dans le bol (58).

14. Ensemble selon la revendication précédente, **caractérisé en ce qu'**une portion de la griffe (77) s'étend axialement en vis-à-vis de la bague (52) d'immobilisation.

15. Turbomachine, en particulier d'aéronef, comportant au moins un ensemble selon l'une quelconques des revendications précédentes.
